# EUROPÄISCHE PATENTSCHRIFT

(11) **EP 4 388 231 B1**
(45) Veröffentlichungstag und Bekanntmachung des Hinweises auf die Patenterteilung: **08.10.2025**
(21) Anmeldenummer: 22765831.7
(22) Anmeldetag: 17.08.2022
(51) Int. Cl.: F16K 31/06

(54) **KLAPPANKER FÜR EIN ELEKTROMAGNETISCHES KLAPPANKERMAGNETVENTIL UND VERFAHREN ZUR HERSTELLUNG EINES SOLCHEN KLAPPANKERS**
PIVOTED ARMATURE FOR AN ELECTROMAGNETIC PIVOTED ARMATURE VALVE, AND METHOD FOR PRODUCING SUCH A PIVOTED ARMATURE
ARMATURE BATTANTE POUR UNE VANNE À ARMATURE BATTANTE ÉLECTROMAGNÉTIQUE ET PROCÉDÉ DE FABRICATION D'UNE TELLE ARMATURE BATTANTE

(30) Priorität: 18.08.2021 DE 102021121425
(43) Veröffentlichungstag der Anmeldung: 26.06.2024
(73) Patentinhaber: ETO MAGNETIC GmbH, 78333 Stockach (DE)
(72) Erfinder: RAFF, Viktor, 78467 Konstanz (DE); BÜRSSNER, Jörg, 78234 Engen (DE)
(74) Vertreter: Daub, Thomas
(86) Internationale Anmeldenummer: PCT/EP2022/072952
(87) Internationale Veröffentlichungsnummer: WO 2023/021085

(56) Entgegenhaltungen:
- DE-A1- 102016 125 950
- DE-U- 7 116 788
- US-A- 2 587 356

## Beschreibung

Die vorliegende Erfindung betrifft einen Klappanker für ein elektromagnetisches Klappankermagnetventil nach dem Oberbegriff des Anspruchs 1. Ferner betrifft die vorliegende Erfindung ein Verfahren zur Herstellung eines solchen Klappankers. Des Weiteren betrifft die vorliegende Erfindung ein elektromagnetisches Klappankermagnetventil mit einem derartigen Klappanker.

Derartige Klappanker sind durch ihre Verwendung in Klappankermagnetventilen, die auch als Flachankermagnetventile bezeichnet werden, grundsätzlich bekannt. In den bekannten Klappankermagnetventilen sind die Klappanker elektromagnetisch über eine Spule, die einen Spulenkern umgibt, zwischen einer Öffnungsstellung und einer Schließstellung bewegbar bzw. klappbar. Durch die elektromagnetisch einleitbare Klappbewegung des Klappankers wird ein Ventilsitz freigelegt oder verschlossen, so dass auf diese Weise die Ventilfunktionalität realisiert wird. Die bekannten Klappanker weisen zumeist eine flache, scheibenförmige Form auf und sind als einstückiger Körper ausgestaltet. Die Beweglichkeit des Klappankers relativ zu dem Ventilsitz des Klappankermagnetventils wird durch eine einseitige Befestigung bzw. gelenkige Verbindung des Klappankers, bspw. an einem Ventilgehäuse, ermöglicht, so dass sich der Klappanker um die Gelenkverbindung herum um eine Drehachse drehen kann. Die Abdichtung zwischen dem Klappanker und dem Ventilsitz erfolgt in der Schließstellung des Ventils dadurch, dass eine in dem Klappanker vorgesehene Dichtung derart an dem Ventilsitz anliegt, dass diese flüssigkeitsdicht verschließbar ist.

Aus der DE 10 2016 125 950 A1 ist bspw. Klappankermagnetventil bekannt, das eine Ventilgehäuse, eine Spule mit einem Spulenkern und einen einstückigen Klappanker umfasst. Der Klappanker ist einstückig ausgeführt und über ein Klappgelenk mit dem Ventilgehäuse beweglich verbunden, wobei das Klappgelenk bspw. mittels zweiter Lagerzapfen, die von dem Klappanker hervorstehen, in Gelenkpfannen drehbar befestigt ist. Üblicherweise werden diese Lagerzapfen oder Lagerachsen mittels eines Schweißprozesses oder eines Klebeprozesses an zwei sich gegenüberliegenden Seitenflächen (in Höhenrichtung des Klappankers betrachtet) jeweils einzeln fixiert. Somit sind für diesen Aufbau zwei Lagerzapfen notwendig, die jeweils fixiert werden müssen. Somit besteht ein Mehrbedarf an Einzelteilen. Zudem gestaltet sich die Fertigung des Klappankers aufwendiger, da mehrere Fertigungsschritte zur Bereitstellung der Lagerung notwendig sind. Zudem ist die bekannte Befestigung auch insofern nachteilig, als während des Öffnens und Schließens des Klappankers eine hohe Kraftübertragung gewährleistet werden muss und somit die Verbindung zwischen Lagerachse und Klappanker besonders stabil auszuführen ist, was ebenfalls einen konstruktiven Mehraufwand bedeutet. Ferner ist es konstruktionsbedingt nicht möglich, die Lagerachsen bezüglich ihrer jeweiligen Drehachse kongruent mit einer Mittelebene des Klappankers, betrachtet in einer Höhenrichtung, auszuführen, so dass hieraus ein internes Torsionsmoment in einem Klappankerinneren hervorgerufen werden kann.

Auch ein Einbringen der Dichtung erweist sich bei den bekannten Klappankern als nachteilig, da diese oftmals mittels eines aufwendigen Vulkanisierungsprozesses am Anker befestigt werden muss. Alternativ kann die Dichtung auch in Form einer Einsteckdichtung oder einer Einziehdichtung ausgeführt sein. Die zuletzt genannten Arten der Dichtungsanbringung haben den Nachteil, dass das Dichtungselement sehr weich sein muss und es in einer montierten Position der Dichtung zu einer ungewünschten Verformung, einem erhöhten Verschließ, einem Herausrutschen und/oder zu einem Abriss der Dichtung kommen kann. All dies wirkt sich wiederum nachteilig auf eine Langlebigkeit sowie eine Funktionszuverlässigkeit des Klappankermagnetventils aus.

Die DE 71 16 788 U offenbart bereits ein Ventil mit einem durch einen Elektromagneten betätigbaren, unter der Vorspannung einer Feder stehenden, sich ortsfest an einem Teil des Magnetkerns abstützenden Kippanker sowie mit einem auf den Anker gerichteten und durch diesen verschließbaren Ventilsitz. Eine Platte ist an der Oberfläche des Ankers mittels einer Halteplatte befestigt, deren nach unten weisenden Zungen am Anker festgeklemmt sind. Die Halteplatte ist mit einer Ausnehmung und die Gummiplatte mit einer Ausnehmung versehen, durch welche hindurch sich das abgewinkelte Ende einer Blattfeder erstreckt. Das untere, abgewinkelte Ende der Blattfeder ragt in eine rechteckige oder zumindest nicht runde in der Oberfläche des Ankers hinein, wobei diese Nut nur wenig länger ist als die Breite der Blattfeder, so dass der Anker sich weder geradlinig bewegen noch in seiner Ebene drehen kann, aber um die Kante des Schenkels des Magnetkerns kippbar ist.

Die US 2 587 356 A offenbart ebenfalls bereits ein Ventil. Eine flexible Membran ist mit Hilfe von Dichtungsmitteln am Umfang zwischen Gussteilen eingespannt, wobei sich die Membran quer zu einer Kammer über die Sitze erstreckt. Auf einer Seite trägt die Membran eine starre Stützscheibe mit darauf befestigten elastischen kreisförmigen Ventilelementen zum Schließen der Verbindung mit den Sitzen. Auf der anderen Seite trägt die Membran einen Elektromagnetanker, wobei der Anker eine geringere Breite als die äußere Begrenzung hat.

Die zuvor genannten Nachteile führen zu einer Konsequenz, dass eine kostengünstige Großserien- bzw. Massenfertigung von Klappankermagnetventilen nur sehr eingeschränkt möglich ist und entsprechend diese Ventiltechnologie, kostenbedingt, ihr vollständiges Potential bislang nicht ausschöpfen kann. Daher besteht ein inhärenter Bedarf, die zuvor genannten Nachteile des Standes der Technik zu überwinden.

Ausgehend vom vorangehend genannten Stand der Technik liegt der vorliegenden Erfindung daher eine Aufgabe zugrunde, einen Klappanker für ein elektromagnetisches Klappankermagnetventil derart weiterzuentwickeln, dass die oben genannte Nachteile auf konstruktive Art und Weise überwunden werden können.

Zur Lösung dieser Aufgabe ist ein erfindungsgemäßer Klappanker mit einer Lagerung und einer Dichtung vorgeschlagen. Der erfindungsgemäße Klappanker umfasst einen ersten Teilkörper und einen zweiten Teilkörper wobei die Dichtung und die Lagerung zwischen dem ersten Teilkörper und dem zweiten Teilkörper angeordnet sind, und der erste Teilkörper mit dem zweiten Teilkörper unverlierbar verbunden ist.

Ein Hauptvorteil des erfindungsgemäßen Klappankers ist in dem konstruktiven Aufbau zu sehen, da durch die Bereitstellung der zwei Teilkörper im nicht montierten Zustand des Klappankers die Möglichkeit geschaffen wird, die Dichtung und die Lagerung zwischen den beiden Teilkörpern einzulegen. Der Klappanker wird sodann durch Zusammenfügen des ersten Teilkörpers und des zweiten Teilkörpers bereitgestellt, zwischen denen die Dichtung und die Lagerung eingebracht sind. Der Klappanker ist also im Gegensatz zum Stand der Technik nicht mehr einstückig in Form eines einzigen scheibenförmigen Bauteils ausgeführt, sondern setzt sich aus zwei Teilkörpern zusammen. Somit wird die Fertigung wesentlich erleichtert. Auch wird bspw. die Anbringung der Lagerung gegenüber dem Stand der Technik wesentlich erleichtert, da bspw. die Lagerung in Form einer Lagerstange bzw. Lagerachse zwischen den beiden Teilkörpern eingeklemmt werden kann. So kann auf einen ansonsten aufwendigen Schweiß- oder Klebeprozess verzichtet werden. Auch kann durch die erfindungsgemäße Ausführung des Klappankers die Dichtung eine höhere Steifigkeit und somit Lebensdauer aufweisen, da kein Einziehen oder Vulkanisieren der Dichtung zu deren Anbringung notwendig ist. Vielmehr kann die Dichtung vorzugsweise einfach zwischen dem ersten Teilkörper und dem zweiten Teilkörper eingelegt werden. Insgesamt kann also die Herstellung des Klappankers auf überraschend einfach Art und Weise vereinfacht werden, so dass auch eine Massenfertigung und Automatisierung auf kostengünstige Weise ermöglicht ist.

Unter dem Begriff "Klappanker" wird vorliegend ein Flachanker oder ein Anker in synonymer Art und Weise verstanden. Der Klappanker ist im zusammengebauten Zustand vorzugsweise im Wesentlichen scheibenförmig. Unter "im Wesentlichen scheibenförmig" wird hier die äußerste, umfangsseitige Grundform verstanden, ohne dass hierbei Ausnehmungen oder Materialausschnitte berücksichtigt werden. Der Klappanker kann bspw. eine, im Querschnitt betrachtet, runde oder ovale Grundform aufweisen. Je nach Ventilbauweise kann auch eine eckige Form grundsätzlich möglich sein. Der Klappanker zeichnet sich vorzugsweise dadurch aus, dass er zumindest eine Flachseite aufweist, die im eingebauten Zustand des Klappankers in Richtung des Ventilsitzes weist. Es kann auch vorteilhaft sein, wenn der Klappanker zwei sich gegenüberliegende Flachseiten aufweist.

Der jeweilige Teilkörper zeichnet sich dadurch aus, dass er jeweils eine im Wesentlichen scheibenförmig, insbesondere zylinderförmige, Grundform mit einer bestimmten Dicke aufweist. Unter "im Wesentlichen scheibenförmig" wird hier die äußerste, umfangsseitige Grundform verstanden, ohne dass hierbei Ausnehmungen oder Materialausschnitte berücksichtigt werden. Der jeweilige Grundkörper kann bspw. eine, im Querschnitt betrachtet, runde oder ovale Form aufweisen. Je nach Ventilbauweise kann auch eine eckige Form grundsätzlich möglich sein. Zumindest einer der Teilkörper zeichnet sich dadurch aus, dass er zumindest eine Flachseite aufweist, die im verbunden Zustand der bevorzugten, zumindest einen Flachseite des Klappankers entspricht. Vorzugsweise stimmt eine äußere Kontur des ersten Teilkörpers mit einer äußeren Kontur des zweiten Teilkörpers überein. Der erste Teilkörper und der zweite Teilkörper sind somit vorzugsweise konturgleich bzw. deckungsgleich (betrachtet für einen jeweiligen im Wesentlichen scheibenförmigen Querschnitt). Der erste Teilkörper kann sich von dem zweiten Teilkörper hinsichtlich seiner Dicke unterscheiden.

Unter einer "Dichtung" ist vorliegend jegliche Art von Dichtungsmittel zu verstehen, das sich zur Einlage zwischen den zwei Teilkörpern eignet und eine für die Ventilfunktion benötigte Steifigkeit aufweist. Beispielsweise kann es sich um einen Dichtkörper mit einer vorbestimmten Steifigkeit handeln, der aus Gummi, einem (synthetischen) Kautschuk oder ähnlichem hergestellt sein kann.

Ferner wird zur Lösung der oben genannten Aufgabe ein Verfahren zur Herstellung eines Klappankers für ein elektromagnetisches Klappankermagnetventil vorgeschlagen, dass zumindest durch die folgenden Schritte gekennzeichnet ist. Bereitstellen eines ersten Teilkörpers des Klappankers, eines zweiten Teilkörpers des Klappankers, einer Dichtung und einer Lagerung. Einlegen der Dichtung in den ersten Teilkörper oder in den zweiten Teilkörper. Einlegen der Lagerung in den ersten Teilkörper oder in den zweiten Teilkörper. Platzieren des zweiten Teilkörpers relativ zu dem ersten Teilkörper und Zusammenfügen des ersten Teilkörpers mit dem zweiten Teilkörper zu dem Klappanker.

Es versteht sich, dass die Schritte des erfindungsgemäßen Verfahrens nicht notwendigerweise in der genannten Reihenfolge ausgeführt sein müssen. Zudem können zwischen den genannten Schritten auch noch ein oder mehrere Zwischenschritte erfolgen, ohne dass dadurch der Schutzbereich des erfindungsgemäßen Verfahrens verlassen wird. Es ist bspw. egal, in welchen der Teilkörper die Dichtung und/oder die Lagerung eingelegt wird. Die Schritte können entweder manuell, teilautomatisch oder vollautomatisch ausgeführt werden. Bspw. wäre es möglich, die Schritte mittels eines Industrieroboters auszuführen, so dass eine automatisierte Fertigung des Klappankers ermöglicht wird. Hierdurch können insbesondere die Herstellungskosten sowie die Herstellungsdauer vermindert und somit das resultierende Herstellungsprodukt (d. h., der Klappanker) günstiger hergestellt werden.

Ebenfalls wird die Aufgabe durch ein elektromagnetisches Klappankermagnetventil gelöst, das ein Ventilgehäuse, einen in dem Ventilgehäuse angeordneten Spulenkern, der zumindest abschnittsweise von einer elektromagnetisch aktivierbaren Spule umgeben ist, sowie eine Ausführungsform des erfindungsgemäßen Klappankers umfasst. Der Klappanker ist dabei besonders bevorzugt mit dem Ventilgehäuse um zumindest eine Lagerachse schwenkbar und/oder klappbar verbunden und derart dazu ausgebildet ist, mit einem stationären Ventilsitz zusammenzuwirken, so dass in Reaktion auf ein Bestromen der Spule ein Verschließen oder Freigeben des Ventilsitzes erfolgen kann.

Das Ventilgehäuse kann bspw. aus einem Spritzgussteil hergestellt sein. Grundsätzlich erscheint es auch möglich, das Ventilgehäuse mittels eines 3D-Druckverfahrens herzustellen, um dadurch komplexe Formen realisieren zu können. Vorzugsweise umfasst das Klappankermagnetventil zumindest einen Einlass sowie zumindest einen Auslass, wobei der Ventilsitz vorzugsweise an dem Auslass angeordnet ist bzw. den Auslass umgibt. Besonders bevorzug ist es, wenn der Klappanker mittels einer Feder gegen den Ventilsitz im unbestromten Zustand der Spule vorgespannt ist, so dass das Ventil in diesem Zustand geschlossen ist. Diese einfache Realisierung eines stromlos geschlossenen (NC = Normally Closed) Ventils, erscheint energietechnisch besonders vorteilhaft, da lediglich für das Öffnen des Ventils elektrische Energie benötigt wird. Alternative Ausgestaltungen des Ventilsitzes und/oder einer bevorzugt einzusetzenden Federmittel, insbesondere das Vorsehen eines möglichen (axialen) Durchbruchs durch den Spulenkern, sind grundsätzlich möglich und ermöglichen insbesondere eine Variation einer Ventiltopologie. So ist bspw. abweichend von einer NC-2/2-Wege-Ventiltopologie eine NO-2/2-Wege-Ventiltopologie (NO = Normally Open = NO), d.h. eine stromlos geöffnete Topologie mit zwei Einlässe bzw. Auslässe und/oder zwei Schaltstellungen, denkbar. Alternativ ist auch eine 3/2-Wege-Ventiltopologie realisierbar.

In einer bevorzugten Ausführungsform ist die Dichtung zwischen dem ersten Teilkörper und dem zweiten Teilkörper eingelegt. Diese Ausgestaltung erweist sich konstruktiv von Vorteil, da hierdurch eine einfache Montage des Klappankers ermöglicht ist. Insbesondere kann auch ein Einziehen oder Vulkanisieren verzichtet werden. Die Dichtung ist vielmehr auf einfache Art und Weise zwischen dem ersten Teilkörper und dem zweiten Teilkörper einlegbar und kann somit vor dem Zusammenfügen der beiden Teilkörper in eine vorbestimmte Position gebracht werden. Hierbei ist es grundsätzlich beliebig, an welcher Stelle die Dichtung zwischen den Teilkörpern eingelegt wird. Dies hängt im Wesentlichen von dem Aufbau des jeweiligen Klappankermagnetventils bzw. einer Lage und Positionierung des Ventilsitzes innerhalb des Klappankermagnetventils ab.

**In** einer weiteren bevorzugten Ausführungsform umfasst der erste Teilkörper und/oder der zweite Teilkörper zumindest eine Ausnehmung, die dazu geformt ist, die Dichtung zumindest teilweise aufzunehmen. Es versteht sich, dass grundsätzlich nur einer der beiden Teilkörper die Ausnehmung umfassen kann, um die Dichtung vollständig aufzunehmen. Welche der beiden Teilkörper die Ausnehmung aufweist, ist dabei grundsätzlich beliebig. Ebenfalls ist es möglich, dass beide Teilkörper jeweils eine zueinander korrespondierende Ausnehmung umfassen, so dass die Dichtung bspw. anteilig in dem ersten Teilkörper aufgenommen ist und anteilig in dem zweiten Teilkörper aufgenommen ist. Es ist zudem besonders bevorzugt, wenn die Ausnehmung bspw. in Form einer Stufenbohrung in dem ersten und/oder zweiten Teilkörper vorgesehen ist. Eine derartige Stufenbohrung weist bspw. eine Stufe bzw. einen, beispielsweise kreisförmigen, Schulterbereich auf, an der bzw. dem die Dichtung beim Einlegen anliegen kann, so dass ein Herausfallen der Dichtung verhindert ist und ein Abstützbereich für die Dichtung bereitgestellt ist. Zudem weist die Ausnehmung vorzugsweise eine Durchgangsbohrung auf, die vorzugsweise derart dimensioniert ist, dass der Ventilsitz in einer geschlossenen Position des Klappankermagnetventils in die Durchgangsbohrung einführbar ist. Derart ist der betreffende Ventilsitz im geschlossenen Zustand des Ventils nur noch in Kontakt mit der Dichtung und berührt den die Dichtung umgebenden Teilkörper nicht. Hierdurch kann eine vollständige Abdichtung erreicht werden, da die Dichtbarriere unmittelbar zwischen der Dichtung und dem Ventilsitz ausgebildet ist.

In einer weiteren bevorzugten Ausführungsform umfasst die Lagerung eine insbesondere stabförmige Lagerachse. Die Lagerung ist also bspw. stabförmig ausgeführt und derart dimensioniert, dass bei einem Einlegen zwischen den beiden Teilkörpern zwei sich gegenüberliegende Endbereiche der Lagerung, betrachtet in ihrer Längsrichtung, über eine Umfangskontur des Klappankers bzw. des jeweiligen Teilkörpers hervorstehen. Somit kann eine Befestigung des Klappankers, bspw. an Gegenlagerungen in dem Ventilgehäuse, ermöglicht werden. Die Lagerung ist vorzugsweise als Rundstab ausgeführt, dessen Durchmesser geringer ist als eine Scheibendicke des scheibenförmigen Klappankers. Die beiden Teilkörper des Klappankers umfassen vorzugsweise jeweils eine längliche Ausnehmung, bspw. in Form einer Rille mit einem (teil-) runden Querschnitt, in die die Lagerung eingelegt werden kann. Eine derartige Rille dient insbesondere als Zentrierhilfe bei der Montage des Klappankers bzw. bei der Platzierung der Lagerachse bzw. des Lagerstabes relativ zu dem jeweiligen Teilkörper. Die Lagerachse kann vorzugsweise, entlang ihrer Längserstreckung betrachtet, einen zentiert angeordnete Ringbund aufweisen, zu dem es eine korrespondierende Ausnehmung in zumindest einem der Teilkörper gibt, so dass hierdurch eine Zentrierung der Lagerachse relativ zu dem jeweiligen Teilkörper auf einfache Weise gewährleistet werden kann. Die die Lagerachse aufnehmende Ausnehmung bzw. Rille weist vorzugsweise eine derartige Dimensionierung auf, dass ein Einklemmen bspw. ein Einpassen der Lagerachse in der Rille bzw. Ausnehmung ermöglicht ist. Hierdurch wird die Lagerung auf besonders einfache Art und Weise gegenüber dem jeweiligen Teilkörper des Klappankers drehfest mit diesem verbunden.

In einer weiteren bevorzugten Ausführungsform ist die insbesondere stabförmige Lagerachse in dem verbundenen Zustand des ersten und zweiten Teilkörpers zwischen dem ersten Teilkörper und dem zweiten Teilkörper eingeklemmt. Grundsätzlich ist es auch möglich, dass die Lagerachse zwischen dem ersten und dem zweiten Teilkörper alternativ oder ergänzend eingeklebt, verlötet oder verschweißt wird.

In einer weiteren bevorzugten Ausführungsform ist der erste Teilkörper mit dem zweiten Teilkörper durch Clinchen, Schweißen, Kleben oder Nieten verbunden. Grundsätzlich sind auch andere Fügetechniken vorstellbar, die sich eignen, den ersten Teilkörper mit dem zweiten Teilkörper unverlierbar, d. h. fest und insbesondere gegenübereinander unbeweglich, zu verbinden.

In einer weiteren bevorzugten Ausführungsform weist der erste Teilkörper und/oder der zweite Teilkörper eine im Wesentlichen scheibenförmige Form auf. Es sei erwähnt, dass der Klappanker im verbundenen Zustand des ersten und zweiten Teilkörpers ebenfalls eine im Wesentlichen scheibenförmige Form aufweist. Unter der Formulierung "im Wesentlichen scheibenförmig" wird vorliegend verstanden, dass der jeweilige Teilkörper bezüglich einer imaginären Querschnittskontur scheibenförmig ausgeführt ist, ohne dass dabei Ausnehmungen oder sonstige Materialausschnitte berücksichtigt sind.

In einer weiteren bevorzugten Ausführungsform umfasst der Klappanker, entlang einer Umfangsrichtung des Klappankers betrachtet, zumindest einen Materialausschnitt. Dieser Materialausschnitt kann bspw. konstruktive Gründe haben, oder dient dazu den Klappanker gewichtsmäßig leichter auszugestalten, so dass eine geringere Kraft zum Öffnen und/oder Schließen des Ventils notwendig ist. Welche Form die Materialausschnitte aufweisen ist grundsätzlich beliebig.

In einer weiteren bevorzugten Ausführungsform sind zumindest zwei der Materialausschnitte derart an dem Anker angeordnet, dass zwei sich gegenüberliegende Endabschnitte der insbesondere stabförmigen Lagerachse freiliegen. Somit können die beiden Teilkörper bspw. rechteckförmige Einkerbungen oder ähnliches haben, durch die die Endabschnitte der Lagerung im verbundenen Zustand der beiden Teilkörper freiliegen. Hierdurch ist eine Befestigung des Klappankers an dem Ventilgehäuse bzw. an Gegenlagerungen des Ventilgehäuses möglich.

In einer weiteren bevorzugten Ausführungsform ist eine Drehachse des Klappankers in dem verbundenen Zustand des ersten und zweiten Teilkörpers in einer orthogonal zu einer Rotationssymmetrieachse des Klappankers liegenden Mittelebene des Klappankers angeordnet. Die Drehachse ist somit vorzugsweise kongruent in der Mittelebene angeordnet. Dies stellt gegenüber dem Stand der Technik einen Unterschied dar, da im Stand der Technik die Drehachse der Lagerung versetzt zu der Mittelebene des Klappankers angeordnet ist, so dass hier interne Torsionsmomente beim Öffnen und Schließen des Klappankers entstehen können. Dies kann durch die erfindungsgemäße Anordnung der Lagerung bzw. Lagerachse vermieden werden, da nun die Drehachse in der Mitteleben liegt. Diese Anordnung der Drehachse in der Mittelebene wird dadurch ermöglicht, dass der Klappanker in zwei Teilkörper getrennt ist, die zusammengefügt werden, um den Klappanker auszubilden.

In einer weiteren bevorzugten Ausführungsform umfasst der erste Teilkörper zumindest bereichsweise eine muldenförmige Vertiefung und der zweite Teilkörper zumindest bereichsweise einen zu der muldenförmigen Vertiefung korrespondierenden zapfenförmigen Vorsprung. Es versteht sich, dass grundsätzlich auch eine alternative Ausführung denkbar ist, in der der zweite Teilkörper zumindest bereichsweise eine muldenförmige Vertiefung und der erste Teilkörper zumindest bereichsweise einen zu der muldenförmigen Vertiefung korrespondierenden zapfenförmigen Vorsprung umfasst. Unter muldenförmig kann grundsätzlich eine beliebige Geometrie der Vertiefung verstanden werden. Vorzugsweise ist die muldenförmige Vertiefung eine zylinderförmige Ausnehmung, die vorzugsweise in einem geometrischen Zentrum des jeweiligen Teilkörpers angeordnet ist. Zu einer derartigen zylinderförmige Ausnehmung weist der andere Teilkörper vorzugsweise einen zylinderförmigen Vorsprung bzw. Zapfen auf, der ebenfalls in einem geometrischen Zentrum dieses Teilkörpers angeordnet ist.

In einer weiteren bevorzugten Ausführungsform ist der zapfenförmige Vorsprung in dem verbundenen Zustand des ersten und zweiten Teilkörpers relativ zu der muldenförmigen Vertiefung zentriert und greift in die muldenförmige Vertiefung ein. Hierdurch wird eine Zentrierhilfe für die Montage bzw. das Zusammenfügen des ersten Teilkörpers und des zweiten Teilkörpers bereitgestellt.

Es kann auch bevorzugt sein, dass einer der Teilkörper sowohl einen, insbesondere zentriert angeordneten, zapfenartigen Vorsprung als auch einen, insbesondere zentriert angeordnete, muldenförmige Ausnehmung aufweist. Hierbei kann zumindest ein Teil des zapfenartigen Vorsprungs auf einer gegenüberliegenden Seite eines freistehenden Endbereiches des zapfenartigen Vorsprungs die muldenförmige Ausnehmung umfassen, so dass also die Ausnehmung noch bis in den zapfenförmigen Vorsprung hineinragt. Insbesondere durch den freistehenden Endbereich des zapfenartigen Vorsprungs, der vorzugsweise eine plane Fläche umfasst, kann eine Plattform für ein Widerlager einer Vorspannfeder bereitgestellt werden. Über die Vorspannfeder kann der Klappanker dann bspw. gegen den Ventilsitz oder gegen einen Gehäuseabschnitt bzw. eine Gehäuseschulter vorgespannt sein.

In einer weiteren bevorzugten Ausführungsform des erfindungsgemäßen Verfahrens umfasst der Schritt des Zusammenfügens des ersten und zweiten Teilkörpers als ein Fügeprozess zumindest ein Clinchen, Schweißen, Kleben und/oder Nieten. Es versteht sich, dass grundsätzlich auch eine Kombination der vorstehend genannten Fügetechniken möglich ist, um den ersten und zweiten Teilkörper miteinander zu verbinden. Zudem versteht es sich, dass grundsätzlich auch weitere, hier nicht aufgezählte Fügetechniken Verwendung finden können. So ist es beispielsweise grundsätzlich denkbar, dass der erste Teilkörper mit dem zweiten Teilkörper über eine oder mehrere Schrauben oder über eine Presspassung oder ähnliches verbunden ist.

Es wird davon ausgegangen, dass die Definitionen und Ausführungen der oben genannten Begriffe für alle in dieser Beschreibung und im Folgenden beschriebenen Aspekte gelten, sofern nichts anderes angegeben ist. Weitere Einzelheiten, Merkmale und Vorteile der Erfindung ergeben sich aus der nachfolgenden Beschreibung der bevorzugten Ausführungsbeispiele in Verbindung mit den Unteransprüchen. Hierbei können die jeweiligen Merkmale für sich allein oder zu mehreren in Kombination miteinander verwirklicht sein. Insbesondere können die bezüglich dem Klappanker genannten Merkmale sich in äquivalenter Form auf das erfindungsgemäße Verfahren beziehen und bei einer Abgrenzung desselben Verwendung finden, ohne nochmals in dezidierter Form als jeweilige Ausführungsformen des Verfahrens aufgeführt zu werden. Es versteht sich, dass sich betreffende Vorrichtungsmerkmale zu Verfahrensmerkmalen umformulieren lassen, ohne den Rahmen der vorliegenden Erfindung zu verlassen. Die Erfindung ist nicht auf die Ausführungsbeispiele beschränkt. Die Ausführungsbeispiele sind in den Figuren schematisch dargestellt. Gleiche Bezugsziffern in den einzelnen Figuren bezeichnen gleiche oder funktionsgleiche bzw. hinsichtlich ihrer Funktion einander entsprechende Elemente.

Nachfolgend werden Details und Ausführungsformen der Erfindung anhand von lediglich schematischen Zeichnungen erläutert.

Es zeigen:
- Fig. 1:: eine schematische Draufsicht eines erfindungsgemäßen Klappankers gemäß einem ersten Ausführungsbeispiel;
- Fig. 2: eine schematische Schnittansicht eines erfindungsgemäßen Klappankers gemäß dem ersten Ausführungsbeispiel;
- Fig. 3: eine schematische Schnittansicht eines elektromagnetischen Klappankermagnetventil mit einem erfindungsgemäßen Klappankers gemäß einem zweiten Ausführungsbeispiel; und
- Fig. 4: ein Verfahrensflussdiagramm eines Ausführungsbeispiels des erfindungsgemäßen Verfahrens.

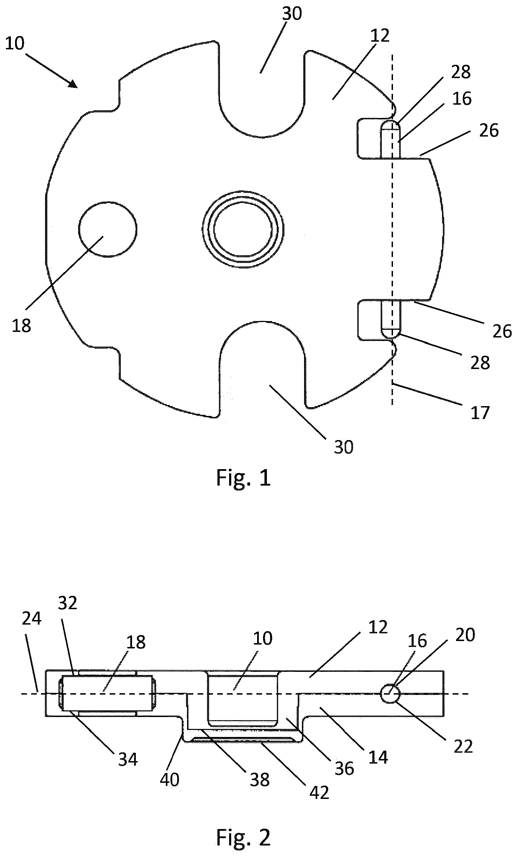

Fig. 1 zeigt eine schematische Draufsicht eines erfindungsgemäßen Klappankers 10 gemäß einem ersten Ausführungsbeispiel. Der Klappanker 10 weist erfindungsgemäß einen ersten Teilkörper 12 und einen zweiten Teilkörper 14 auf, wobei in Fig. 1 aufgrund der Draufsicht lediglich der erste Teilkörper 12 zu erkennen ist. Ferner umfasst der Klappanker 10 eine Lagerung 16 und eine Dichtung 18.

Die Lagerung 16 ist vorliegend in Form einer stabförmigen Lagerstange ausgeführt und zwischen dem ersten Teilkörper 12 und dem zweiten Teilkörper 14 eingeklemmt. Hierzu weist der erste Teilkörper 12 eine sich länglich erstreckende muldenförmige erste Nut 20 auf, die einem halben Querschnitt der Lagerstange 16 entspricht. Der zweite Teilkörper 14 weist ebenfalls eine sich länglich erstreckende muldenförmige zweite Nut 22 auf, die einem halben Querschnitt der Lagerstange 16 entspricht. Die erste Nut 20 und die zweite Nut 22 sind in dem verbundenen Zustand des ersten Teilkörpers 12 und des zweiten Teilkörpers 14 deckungsgleich und spiegelsymmetrisch zu einer Mittelebene 24 des Klappankers 10 (siehe Fig. 1) angeordnet. Derart ist die Lagerstange 16 zwischen dem ersten Teilkörper 12 und dem zweiten Teilkörper 14 eingeklemmt. Die Lagerstange 16 ist relativ zu den beiden Teilkörpern 12, 14 nicht drehbar. Mittels der Lagerstange 16 ist der Klappanker im eingebauten Zustand jedoch um eine Drehachse 17 drehbar (siehe Fig. 1). Die Drehachse 17 ist liegt kongruent in der Mittelebene 24 des Klappankers 10.

Ferner weisen die beiden Teilkörper 12, 14 jeweils zwei Materialausschnitte 26 auf, die im Wesentlichen rechteckförmig ausgestaltet sind. Die Materialausschnitte 26 sind in dem verbunden Zustand der beiden Teilkörper 12, 14 deckungsgleich zueinander. Derart liegen zwei sich gegenüberliegende Endbereiche 28 der Lagerung 16 frei und können bspw. mit einem Gegenlager (nicht gezeigt) verbunden werden. Die beiden Teilkörper 12, 14 weisen zudem jeweils zwei umfangsseitige Aussparungen 30 auf, die im Wesentlichen aus Gründen der Gewichtseinsparung vorgesehen sind.

Die Dichtung 18 ist vorliegend zwischen dem ersten Teilkörper 12 und dem zweiten Teilkörper 14 eingelegt. Hierzu weist der erste Teilkörper 12 vorliegend eine erste Ausnehmung 32 auf, die in Form einer Stufenbohrung ausgeführt ist. Die erste Ausnehmung 32 weist einen Bohrungsabschnitt mit einem ersten Durchmesser sowie eine Durchgangsbohrung mit einem zweiten Durchmesser auf, wobei der erste Durchmesser größer als der zweite Durchmesser ist. Zudem weist der zweite Teilkörper 14 eine zweite Ausnehmung 34 auf, die in Form einer Stufenbohrung ausgeführt ist. Die zweite Ausnehmung 34 weist einen Bohrungsabschnitt mit einem ersten Durchmesser sowie eine Durchgangsbohrung mit einem zweiten Durchmesser auf, wobei der erste Durchmesser größer als der zweite Durchmesser ist. Die Dichtung ist jeweils anteilig in der ersten Ausnehmung 32 und der zweiten Ausnehmung 34 aufgenommen. Die Dichtung 18 liegt dabei an einem Schulterbereich der beiden Teilkörper 12, 14 an, der durch den Durchmesserunterschied zwischen dem erste Durchmesser und dem zweiten Durchmesser also ein kreisringförmiger Anlagebereich ausgebildet ist. Dadurch ist die Dichtung 18 verliersicher zwischen dem ersten Teilkörper 12 und dem zweiten Teilkörper 14 angeordnet. Die Dichtung 18 ist vorliegend als kreisrunde, zylinderförmige Gummidichtung ausgeführt. Durch die jeweilige Durchgangsbohrung liegt ein Teil der Dichtung 18 nach außen hin frei (siehe Fig. 1).

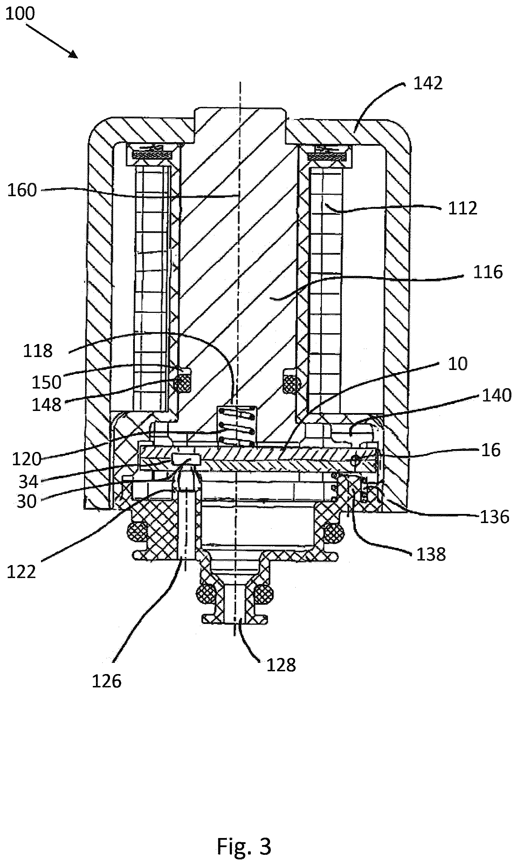

Die beiden Teilkörper 12, 14 sind vorliegend mittels eines zapfenartigen Vorsprungs 36, der an dem ersten Teilkörper 12 um dessen geometrisches Zentrum ausgebildet ist, sowie einer dazu korrespondierenden muldenförmigen Vertiefung 38 in dem zweiten Teilkörper 14, die um dessen geometrisches Zentrum ausgebildet ist, gegenübereinander zentriert. An dem zweiten Teilkörper 14 ist zudem um dessen geometrisches Zentrum auf der gegenüberliegenden Seite der muldenförmigen Vertiefung 38 ein zweiter zapfenförmiger Vorsprung 40 ausgebildet. Der zweite zapfenförmige Vorsprung 40 bildet auf seiner Kopfseite einen Abstützfläche 42 aus. Die Abstützfläche 42 ist dazu ausgebildet, dass der Klappanker 10 im eingebauten Zustand mittels einer Druckfeder 120 gegen einen Ventilsitz 122 vorgespannt werden kann (siehe Fig. 3).

Das Klappankermagnetventil 100 gemäß Fig. 3 weist ein Ventilgehäuse 142 auf. In dem Ventilgehäuse 142 ist ein Spulenkern 116 entlang einer Längs- bzw. Symmetrieachse 160 zentriert, angeordnet. Der Spulenkern 116 ist von einer elektromagnetischen Spule 112 umgeben, die bspw. in Form von mehreren Drahtwicklungen um den Spulenkern 116 gelegt ist.

Zur Abdichtung weist der Spulenkern eine Ringnut 150 auf in der eine Ringbunddichtung 148 angeordnet ist, so dass eine Abdichtung zwischen dem elektrischen Teil des Klappankermagnetventils 100 und des fluidführenden Teils des Klappankermagnetventils 100 gewährleistet ist. An einem endseitigen Bereich des Spulenkerns 116 ist eine Aussparung 118 vorgesehen, in der die Druckfeder 120 angeordnet ist. Mittels der Druckfelder 120 kann der Klappanker 10 in einem unbestromten Zustand der Spule 112 gegen einen Ventilsitz 122 mechanisch vorgespannt werden, so dass der Ventilsitz 122 derart an der Dichtung 30 flüssigkeitsdicht anliegt, dass das Klappankermagnetventil 100 geschlossen ist. Der Klappanker 10 ist einseitig um die Drehachse 17 bzw. mittels der Lagerung 16 in dem Ventilgehäuse 142 gelagert. Das Ventilgehäuse 142 weist hierzu einen Gelenkvorsprung 140 auf, der als Anlage für den Klappanker 10 dient. Ferner weist das Ventilgehäuse einen Vorsprung 138 auf, um den eine Feder 136 angeordnet ist. Durch die Feder 136 wird der Klappanker gegengespannt. Durch den Gelenkvorsprung 140 und die Feder 136 sowie die Lagerung 16 ist der Klappanker zumindest zwischen zwei Positionen (der geschlossenen Stellung und der geöffneten Stellung) um die Drehachse 17 schwenkbar. In dem geschlossenen Zustand des Klappankermagnetventils 100 ist es nicht möglich, dass ein Fluid zwischen einem Einlass 128 und einem Auslass 126 fließen kann. Wird die Spule 112 bestromt, wird der magnetische Klappanker gegen eine Druckkraft der Druckfeder 120 in Richtung des Spulenkerns 116 angezogen, bis er in einer geöffneten Stellung (z. B. durch Anschlag an eine Schulter des Ventilgehäuses 142 zum Stehen kommt. In dieser geöffneten Stellung ist dann ein Durchlass zwischen dem Einlass 128 und dem Auslass 126 freigegeben, so dass ein Fluid durch das Ventil fließen kann.

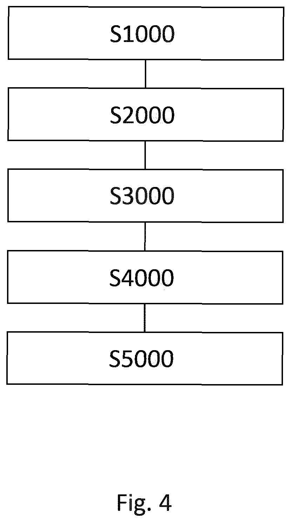

In Fig. 4 ist ein Flussdiagramm eines Ausführungsbeispiels des erfindungsgemäßen Verfahrens gezeigt. Das Verfahren zur Herstellung eines Klappankers 10 für das elektromagnetische Klappankermagnetventil 100 ist gekennzeichnet durch die nachfolgenden Schritte: Bereitstellen S1000 des ersten Teilkörpers 12 des Klappankers 10, des zweiten Teilkörpers 14 des Klappankers 10, der Dichtung 18 und der Lagerung 16; Einlegen S2000 der Dichtung 18 in den ersten Teilkörper 12; Einlegen S3000 der Lagerung 16 in den ersten Teilkörper 12; Platzieren S4000 des zweiten Teilkörpers 14 relativ zu dem ersten Teilkörper 12; und Zusammenfügen S5000 des ersten Teilkörpers 12 mit dem zweiten Teilkörper 14 zu dem Klappanker 10.

### Bezugszeichenliste:

- 10: Klappanker
- 12: erster Teilkörper
- 14: zweiter Teilkörper
- 16: Lagerung, Lagerstange
- 18: Dichtung
- 20: erste Nut
- 22: zweite Nut
- 24: Mittelebene
- 26: Materialausschnitte
- 28: Endbereiche
- 30: Aussparungen
- 32: erste Ausnehmung
- 34: zweite Ausnehmung
- 36: zapfenartiger Vorsprung
- 38: muldenförmigen Vertiefung
- 40: zweiter zapfenartiger Vorsprung
- 42: Abstützfläche
- 100: Klappankermagnetventil
- 112: Spule
- 116: Spulenkern
- 118: Aussparung
- 120: Druckfeder
- 122: Ventilsitz
- 126: Auslass
- 128: Einlass
- 136: Feder
- 138: Vorsprung
- 140: Gelenkvorsprung
- 142: Ventilgehäuse
- 148: Ringbunddichtung
- 150: Ringnut
- 160: Längs- bzw. Symmetrieachse
- S1000: Bereitstellen
- S2000: Einlegen der Dichtung
- S3000: Einlegen der Lagerung
- S4000: Platzieren
- S5000: Zusammenfügen

## Patentansprüche

1. Klappanker für ein elektromagnetisches Klappankermagnetventil, der eine Lagerung (16) und eine Dichtung (18) umfasst, wobei der Klappanker (10) einen ersten Teilkörper (12) und einen zweiten Teilkörper (14) umfasst, wobei der erste Teilkörper (12) mit dem zweiten Teilkörper (14) unverlierbar verbunden ist,
**dadurch gekennzeichnet, dass** die Dichtung (18) und die Lagerung (16) zwischen dem ersten Teilkörper (12) und dem zweiten Teilkörper (14) angeordnet sind.

2. Klappanker nach Anspruch 1, **dadurch gekennzeichnet, dass** die Dichtung (18) zwischen dem ersten Teilkörper (12) und dem zweiten Teilkörper (14) eingelegt ist.

3. Klappanker nach Anspruch 1 oder 2, **dadurch gekennzeichnet, dass** der erste Teilkörper (12) und/oder der zweite Teilkörper (14) zumindest eine Ausnehmung umfasst, die dazu geformt ist, die Dichtung (18) zumindest teilweise aufzunehmen.

4. Klappanker nach einem der vorstehenden Ansprüche, **dadurch gekennzeichnet, dass** die Lagerung (16) eine insbesondere stabförmige Lagerachse umfasst.

5. Klappanker nach Anspruch 4, **dadurch gekennzeichnet, dass** die Lagerachse (16) in dem verbundenen Zustand des ersten und zweiten Teilkörpers (12, 14) zwischen dem ersten Teilkörper (12) und dem zweiten Teilkörper (14) eingeklemmt ist.

6. Klappanker nach einem der vorstehenden Ansprüche, **dadurch gekennzeichnet, dass** der erste Teilkörper (12) mit dem zweiten Teilkörper (14) durch Clinchen, Schweißen, Kleben oder Nieten verbunden ist.

7. Klappanker nach einem der vorstehenden Ansprüche, **dadurch gekennzeichnet, dass** der erste Teilkörper (12) und/oder der zweite Teilkörper (14) eine im Wesentlichen scheibenförmige Form aufweist.

8. Klappanker nach einem der vorstehenden Ansprüche, **dadurch gekennzeichnet, dass** der Klappanker (10), entlang einer Umfangsrichtung des Klappankers (10) betrachtet, zumindest einen Materialausschnitt (26) umfasst.

9. Klappanker nach den Ansprüchen 4 und 8, **dadurch gekennzeichnet, dass** zumindest zwei der Materialausschnitte (26) derart an dem Klappanker (10) angeordnet sind, dass zwei sich gegenüberliegende Endabschnitte (28) der insbesondere stabförmigen Lagerachse (16) freiliegen.

10. Klappanker nach einem der vorstehenden Ansprüche, **dadurch gekennzeichnet, dass** eine Drehachse (17) des Klappankers (10) in dem verbundenen Zustand des ersten und zweiten Teilkörpers (12, 14) in einer orthogonal zu einer Rotationssymmetrieachse des Klappankers (10) liegenden Mittelebene (24) des Klappankers (10) angeordnet ist.

11. Klappanker nach einem der vorstehenden Ansprüche, **dadurch gekennzeichnet, dass** der erste Teilkörper (12) zumindest bereichsweise eine muldenförmige Vertiefung (38) und der zweite Teilkörper (14) zumindest bereichsweise einen zu der muldenförmigen Vertiefung (38) korrespondierenden zapfenförmigen Vorsprung (36) umfasst.

12. Klappanker nach Anspruch 11, **dadurch gekennzeichnet, dass** der zapfenförmige Vorsprung (36) in dem verbundenen Zustand des ersten und zweiten Teilkörpers (12, 14) relativ zu der muldenförmigen Vertiefung (38) zentriert ist und in diese eingreift.

13. Elektromagnetisches Klappankermagnetventil, das ein Ventilgehäuse (142), einen in dem Ventilgehäuse (142) angeordneten Spulenkern (116), der zumindest abschnittsweise von einer elektromagnetisch aktivierbaren Spule (112) umgeben ist, und einen Klappanker (10) nach einem der vorstehenden Ansprüche umfasst, wobei der Klappanker (10) mit dem Ventilgehäuse (142) um zumindest eine Lagerachse (16) schwenkbar und/oder klappbar verbunden und derart dazu ausgebildet ist, mit einem stationären Ventilsitz (122) zusammenzuwirken, so dass in Reaktion auf ein Bestromen der Spule (112) ein Verschließen oder Freigeben des Ventilsitzes (122) erfolgen kann.

14. Verfahren zur Herstellung eines Klappankers (10) nach einem der Ansprüche 1 bis 12 für ein elektromagnetisches Klappankermagnetventil (100), insbesondere nach Anspruch 13, **gekennzeichnet durch** die nachfolgenden Schritte: Bereitstellen (S1000) eines ersten Teilkörpers (12) des Klappankers (10), eines zweiten Teilkörpers (14) des Klappankers (10), einer Dichtung (18) und einer Lagerung (16); Einlegen (S2000) der Dichtung (18) in den ersten Teilkörper (12); Einlegen (S3000) der Lagerung (16) in den ersten Teilkörper (12); Platzieren (S4000) des zweiten Teilkörpers (14) relativ zu dem ersten Teilkörper (12); und Zusammenfügen (S5000) des ersten Teilkörpers (12) mit dem zweiten Teilkörper (14) zu dem Klappanker (10).

15. Verfahren nach Anspruch 14, **dadurch gekennzeichnet, dass** der Schritt des Zusammenfügens als ein Fügeprozess ein Clinchen, Schweißen, Kleben und/oder Nieten umfasst.

## Claims

1. A pivoted armature for an electromagnetic pivoted armature solenoid valve, which comprises a bearing (16) and a seal (18), wherein the pivoted armature (10) comprises a first sub-body (12) and a second sub-body (14), wherein the first sub-body (12) is connected to the second sub-body (14) in a loss-proof manner, **characterized in that** the seal (18) and the bearing (16) are arranged between the first sub-body (12) and the second sub-body (14).

2. The pivoted armature according to claim 1, **characterized in that** the seal (18) is inserted between the first sub-body (12) and the second sub-body (14).

3. The pivoted armature according to claim 1 or 2, **characterized in that** the first sub-body (12) and/or the second sub-body (14) comprise(s) at least one recess which is formed to at least partially receive the seal (18).

4. The pivoted armature according to any one of the preceding claims, **characterized in that** the bearing (16) comprises an in particular rod-like bearing axle.

5. The pivoted armature according to claim 4, **characterized in that** the bearing axle (16) is clamped between the first sub-body (12) and the second sub-body (14) in the connected state of the first and second sub-bodies (12, 14).

6. The pivoted armature according to any one of the preceding claims, **characterized in that** the first sub-body (12) is connected to the second sub-body (14) by clinching, welding, adhesive bonding or riveting.

7. The pivoted armature according to any one of the preceding claims, **characterized in that** the first sub-body (12) and/or the second sub-body (14) have/has a substantially disk-like shape.

8. The pivoted armature according to any one of the preceding claims, **characterized in that** the pivoted armature (10) comprises, when viewed in a circumferential direction of the pivoted armature (10), at least one material cut-out (26).

9. The pivoted armature according to claims 4 and 8, **characterized in that** at least two of the material cutouts (26) are arranged on the armature (10) in such a manner that two mutually opposite end portions (28) of the in particular rod-like bearing axle (16) are exposed.

10. The pivoted armature according to any one of the preceding claims, **characterized in that,** when the first and second sub-bodies (12, 14) are in the connected state, a rotation axis (17) of the pivoted armature (10) is arranged in a middle plane (24) of the pivoted armature (10), which is located orthogonally to an axis of rotational symmetry of the pivoted armature (10).

11. The pivoted armature according to any one of the preceding claims, **characterized in that** the first sub-body (12) comprises at least in regions a trough-like depression (38) and the second sub-body (14) comprises at least in regions a journal-like projection (36) corresponding to the trough-like depression (38).

12. The pivoted armature according to claim 11, **characterized in that** when the first and second sub-bodies (12, 14) are in the connected state, the journal-like projection (36) is centered relative to the trough-like depression (38) and engages therein.

13. An electromagnetic pivoted armature solenoid valve comprising a valve housing (142), a coil core (116) which is arranged in the valve housing (142) and is at least partially surrounded by an electromagnetically activatable coil (112), and comprising a pivoted armature (10) according to any one of the preceding claims, wherein the pivoted armature (10) is connected to the valve housing (142) so as to be pivotable and/or foldable about at least one bearing axle (16) and is configured to cooperate with a fixed valve seat (122) so that, in response to the coil (112) being supplied with electrical power, closing or releasing of the valve seat (122) can be carried out.

14. A method for producing a pivoted armature (10) according to any one of claims 1 to 12 for an electromagnetic pivoted armature solenoid valve (100), in particular according to claim 13, **characterized by** the following steps: providing (S1000) a first sub-body (12) of the pivoted armature (10), a second sub-body (14) of the pivoted armature (10), a seal (18) and a bearing (16); inserting (S2000) the seal (18) in the first sub-body (12); inserting (S3000) the bearing (16) in the first sub-body (12); positioning (S4000) the second sub-body (14) relative to the first sub-body (12); and joining (S5000) the first sub-body (12) with the second sub-body (14) to form the pivoted armature (10).

15. The method according to claim 14, **characterized in that** the step of joining comprises as a joining process clinching, welding, adhesive bonding and/or riveting.

## Revendications

1. Induit pivotant pour une électrovanne électromagnétique à induit pivotant, qui comprend un palier (16) et un joint d'étanchéité (18), l'induit pivotant (10) comprenant un premier corps partiel (12) et un deuxième corps partiel (14), le premier corps partiel (12) étant assemblé de manière imperdable au deuxième corps partiel (14), **caractérisée en ce que** le joint d'étanchéité (18) et le palier (16) sont disposés entre le premier corps partiel (12) et le deuxième corps partiel (14).

2. Induit pivotant selon la revendication 1, **caractérisée en ce que** le joint d'étanchéité (18) est inséré entre le premier corps partiel (12) et le deuxième corps partiel (14).

3. Induit pivotant selon la revendication 1 ou 2, **caractérisée en ce que** le premier corps partiel (12) et/ou le deuxième corps partiel (14) comprend au moins un évidement qui est formé pour recevoir au moins en partie le joint d'étanchéité (18).

4. Induit pivotant selon l'une quelconque des revendications précédentes, **caractérisée en ce que** le palier (16) comprend un axe de palier en particulier en forme de barre.

5. Induit pivotant selon la revendication 4, **caractérisée en ce que** l'axe de palier (16) est serré entre le premier corps partiel (12) et le deuxième corps partiel (14) dans l'état assemblé des premier et deuxième corps partiels (12, 14).

6. Induit pivotant selon l'une quelconque des revendications précédentes, **caractérisée en ce que** le premier corps partiel (12) est assemblé au deuxième corps partiel (14) par clinchage, soudage, collage ou rivetage.

7. Induit pivotant selon l'une quelconque des revendications précédentes, **caractérisée en ce que** le premier corps partiel (12) et/ou le deuxième corps partiel (14) présente une forme sensiblement en forme de disque.

8. Induit pivotant selon l'une quelconque des revendications précédentes, **caractérisée en ce que** l'induit pivotant (10), vue le long d'une direction périphérique de l'induit pivotant (10), comprend au moins une découpe de matériau (26).

9. Induit pivotant selon les revendications 4 et 8, **caractérisée en ce qu'**au moins deux des découpes de matériau (26) sont disposées sur l'induit pivotant (10) de telle sorte que deux sections d'extrémité opposées (28) de l'axe de palier en particulier en forme de barre (16) soient exposées.

10. Induit pivotant selon l'une quelconque des revendications précédentes, **caractérisée en ce qu'**un axe de rotation (17) de l'induit pivotant (10), dans l'état assemblé des premier et deuxième corps partiels (12, 14), est disposé dans un plan médian (24) de l'induit pivotant (10) situé orthogonalement à un axe de symétrie de rotation de l'induit pivotant (10).

11. Induit pivotant selon l'une quelconque des revendications précédentes, **caractérisée en ce que** le premier corps partiel (12) comprend au moins en partie une dépression en forme de cuvette (38) et le deuxième corps partiel (14) comprend au moins en partie une saillie en forme de tenon (36) correspondant à la dépression en forme de cuvette (38).

12. Induit pivotant selon la revendication 11, **caractérisée en ce que** la saillie en forme de tenon (36), dans l'état assemblé des premier et deuxième corps partiels (12, 14), est centrée par rapport à la dépression en forme de cuvette (38) et s'engage dans celui-ci.

13. Électrovanne électromagnétique à induit pivotant, qui comprend un boîtier de soupape (142), un noyau de bobine (116) disposé dans le boîtier de soupape (142), qui est entouré au moins en partie par une bobine (112) pouvant être activée électromagnétiquement, et un induit pivotant (10) selon l'une quelconque des revendications précédentes, l'induit pivotant (10) étant connectée au boîtier de soupape (142) de manière à pouvoir pivoter et/ou basculer autour d'au moins un axe de palier (16) et étant réalisée de manière à coopérer avec un siège de soupape (122) stationnaire, de sorte qu'une fermeture ou une libération du siège de soupape (122) puisse avoir lieu en réaction à une alimentation en courant de la bobine (112).

14. Procédé de fabrication d'un induit pivotant (10) selon l'une quelconque des revendications 1 à 12 pour une électrovanne électromagnétique à induit pivotant (100), en particulier selon la revendication 13, **caractérisé par** les étapes suivantes : fourniture (S1000) d'un premier corps partiel (12) de l'induit pivotant (10), d'un deuxième corps partiel (14) de l'induit pivotant (10), d'un joint d'étanchéité (18) et d'un palier (16) ; insertion (S2000) du joint d'étanchéité (18) dans le premier corps partiel (12) ; insertion (S3000) du palier (16) dans le premier corps partiel (12) ; placement (S4000) du deuxième corps partiel (14) par rapport au premier corps partiel (12) ; et assemblage (S5000) du premier corps partiel (12) avec le deuxième corps partiel (14) pour former l'induit pivotant (10).

15. Procédé selon la revendication 14, **caractérisé en ce que** l'étape d'assemblage comprend en tant que processus d'assemblage un clinchage, un soudage, un collage et/ou un rivetage.
